# EUROPÄISCHE PATENTSCHRIFT

(11) **EP 0 529 378 B1**
(45) Veröffentlichungstag und Bekanntmachung des Hinweises auf die Patenterteilung: **22.11.1995**
(21) Anmeldenummer: 92113539.8
(22) Anmeldetag: 08.08.1992
(51) Int. Cl.: C08L 77/00, C08L 71/12, C08L 51/04

(54) **Thermoplastische Formmasse auf Basis von Polyamiden und Polyphenylenethern**
Thermoplastic moulding based on polyamide and polyphenylene ether
Masse à mouler thermoplastique à base de polyamide et de polyphénylène ether

(30) Priorität: 24.08.1991 DE 4128135
(43) Veröffentlichungstag der Anmeldung: 03.03.1993
(73) Patentinhaber: BASF Aktiengesellschaft, 67063 Ludwigshafen (DE)
(72) Erfinder: Muehlbach, Klaus, Dr., W-6718 Gruenstadt (DE); Heckmann, Walter, Dr., W-6940 Weinheim (DE); Steiert, Peter, Dr., W-6700 Ludwigshafen (DE)

(56) Entgegenhaltungen:
- EP-A- 0 234 063
- EP-A- 0 236 593
- EP-A- 0 304 041
- WO-A-87/03893

## Beschreibung

Die Erfindung betrifft thermoplastische Formmassen, enthaltend als wesentliche Komponenten
A) 20 bis 73 Gew.-% mindestens eines thermoplastischen Polyamids,
B) 25 bis 65 Gew.-% mindestens eines Polyphenylenethers b₁), der bis zu 50 Gew.-%, bezogen auf die Komponente B) durch ein vinylaromatisches Polymeres b₂) ersetzt sein kann,
C) 2 bis 25 Gew.-% eines schlagzähmodifizierenden Kern-Schale-Teilchens, das aus einem vernetzten elastomeren Kern c₁), der eine Glasübergangstemperatur von unter -20°C aufweist und einer Hülle c₂) mit einer Glasübergangstemperatur von über 20°C, die größtenteils auf Basis von vinylaromatischen Monomeren aufgebaut ist, besteht, die mindestens 63 Gew.-% von C) ausmacht,
D) 0 bis 15 Gew.-% eines von C) verschiedenen schlagzähmodifizierenden Polymeren,
E) 0 bis 50 Gew.-% faser- oder teilchenförmigen Füllstoffen oder deren Mischungen,
F) 0 bis 20 Gew.-% eines Flammschutzmittels.

Weiterhin betrifft die Erfindung die Verwendung dieser Formmassen zur Herstellung von Formkörpern sowie die Formkörper, die unter Verwendung dieser Formmassen als wesentlichen Komponenten erhältlich sind.

Mischungen aus Polyphenylenethern (PPE) und Polyamiden weisen im allgemeinen gute mechanische Eigenschaften auf, wenn zum einen eine ausreichende Phasenhaftung der beiden Komponenten gegeben ist und zum anderen geeignete, schlagzähmodifizierende Kautschuke enthalten sind.

Methoden zur Verbesserung der Phasenhaftung und zur Schlagzähmodifizierung sind bekannt.

Zur Verbesserung der Zähigkeit werden den Formmassen ein oder mehrere Schlagzähmodifizierer zugesetzt. Diese Schlagzähmodifizierer können nach der EP 234 063 bzw. der EP 236 593 entweder die Polyamidphase oder die Polyphenylenetherphase schlagzähmodifizieren.

Besteht die Hülle eines Teilchens aus einem Polymeren, das mit PPE verträglich ist wie z.B. Polystyrol, so hält sich dieses Teilchen bevorzugt in der PPE-Phase auf.

Enthält die Hülle dagegen polare Gruppen oder Gruppen, die mit den Endgruppen des Polyamids reagieren können, wird sich dieses Teilchen bevorzugt in der Polyamid-Phase aufhalten.

Es zeigt sich nun, daß die Schlagzähmodifizierung der Polyamidmatrix Nachteile bringt, da sowohl die Steifigkeit als auch die Wärmeformbeständigkeit verringert werden.

Zur Schlagzähmodifizierung der PPE-Phase haben sich Blockkautschuke mit Polystyrolblöcken am besten bewährt. Daneben werden auch Kern-Schale-Teilchen mit einem elastomeren Kern und einer harten Hülle beschrieben (DE 3 702 582, Bsp. 10 und 11, EP 234 063, EP 236 592); in jedem Fall umfaßt die Hülle weniger als 50 Gew.-% des Kern-Schale-Teilchens.

Die gemäß den oben zitierten Patentschriften hergestellten Formmassen weisen entweder eine verbesserungswürdige Zähigkeit (wenn der Schlagzähmodifier im PPE lokalisiert ist) oder eine niedrige Steifigkeit bzw. Wärmeformbeständigkeit auf (wenn der Kautschuk durch Einbau funktioneller Gruppen im Polyamid lokalisiert ist).

In der US 4 681 915 wird ein Schlagzähmodifier aus einem Acrylatkern und einer Hülle aus vernetztem Polystyrol beansprucht. Der Anteil der Hülle am gesamten Kern-Schale-Teilchen beträgt maximal 60 %. Auch diese Formmassen weisen eine unbefriedigende Zähigkeit auf.

Die DE 3 834 912 lehrt, daß der Zusatz von Styrolharzen die Wärmeformbeständigkeit von Blends aus Polyamiden und PPE herabsetzt.

Der vorliegenden Erfindung lag daher die Aufgabe zugrunde, thermoplastische Formmassen auf Basis von Polyamiden und PPE mit guter Zähigkeit, Steifigkeit und hoher Wärmeformbeständigkeit zur Verfügung zu stellen.

Demgemäß wurden die eingangs definierten Formmassen gefunden.

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen mit einem gesättigten oder aromatischen Diamin, welches bis zu 14 Kohlenstoffatome aufweist, oder durch Kondensation von ω-Aminocarbonsäuren oder durch Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten im allgemeinen als Komponente a₁) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren, kann durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, können derartige teilaromatischen Copolyamide Einheiten, die sich von ε-Caprolactam ableiten a₂) und/oder Einheiten, die sich von Adipinsäure und Hexamethylendiamin a₃) ableiten, enthalten.

Der Anteil an Einheiten, die sich von ε-Caprolactam ableiten, beträgt üblicherweise bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, normalerweise 20 bis 60 Gew. -%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten. In diesem Fall ist es vorteilhaft, wenn der Anteil an Einheiten, die frei von aromatischen Gruppen sind, mindestens 10 Gew. -% beträgt, vorzugsweise mindestens 20 Gen.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁)) und 20 bis 50, vorzugsweise 25 bis 40 Gew.-% Einheiten, die sich von ε-Caprolactam ableiten (Einheiten a₂)), erwiesen.

Die Herstellung der teilaromatischen Copolyamide kann z.B. nach dem in den EP-A-129 195 und EP 129 196 beschriebenen Verfahren erfolgen.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T (Hexamethylendiamin/Terephthalsäure) und Polyamid 66/6T (Hexamethylendiamin/Adipinsäure/Terephthalsäure). Die Polyamide weisen im allgemeinen eine relative Viskosität von 2,0 bis 5,0 auf, bestimmt an einer 1 gew.%igen Lösung in 96 %iger Schwefelsäure bei 23°C, was einem Molekulargewicht von etwa 15 000 bis 45 000 entspricht. Polyamide mit einer relativen Viskosität von 2,2 bis 4,0, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4, 6). Herstellungsverfahren für Polyamide dieser Struktur sind z.B. in den EP-A 38 094, EP-A 38 582 und EP-A 39 524 beschrieben.

Der Anteil der Polyamide A) an den erfindungsgemäßen Formmassen beträgt 20 bis 73, vorzugsweise 30 bis 65 und insbesondere 35 bis 60 Gew.-%.

Als Komponente B) enthalten die erfindungsgemäßen Formmassen 25 bis 65, bevorzugt 30 bis 65, besonders bevorzugt 37 bis 60 und insbesondere 35 bis 60 Gew.-% eines Polyphenylenethers.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität η_{red} von 0,2 bis 0,9 dl/g, vorzugsweise von 0,35 bis 0,8 und insbesondere 0,45 bis 0,6, gemessen in einer 1 gew.-%igen Lösung in Chloroform bei 25°C nach DIN 53 726.

Geeignete Polyphenylenether b₁) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxi-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, α-Methylstyrol, Vinyltoluol und Chlorstyrol geeignet.

Bevorzugt werden funktionalisierte oder modifizierte Polyphenylenether eingesetzt, wie sie z.B. aus WO-A 86/02086, WO-A 87/00540, EP-A-222 246, EP-A-223 116 und EP-A-254 048 bekannt sind.

Üblicherweise wird bei deren Herstellung ein Polyphenylenether b₁) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem Polyamid gewährleistet ist.

Die Modifizierung wird im allgemeinen durch Umsetzung eines Polyphenylenethers b₁) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze, gegebenenfalls in Gegenwart von geeigneten vinylaromatischen Polymeren oder Schlagzähmodifiern durchgeführt, wobei wahlweise Radikalstarter zugegen sein können.

Bevorzugt wird in den erfindungsgemäßen Formmassen als Komponente B) ein modifizierter Polyphenylenether eingesetzt, der durch Umsetzung von
b₁) 70 bis 99,95 Gew.-% eines unmodifizierten Polyphenylenethers,
b₂) 0 bis 29,95 Gew.-% eines vinylaromatischen Polymeren,
b₃) 0,05 bis 30 Gew.-% mindestens einer Verbindung aus der Gruppe gebildet aus
   b₃₁) α,β-ungesättigten Dicarbonylverbindungen,
   b₃₂) Amid-Gruppen enthaltenden Monomeren mit einer polymerisierbaren Doppelbindung und
   b₃₃) Lactam-Gruppen enthaltenden Monomeren mit einer polymerisierbaren Doppelbindung,
b₄) 0 bis 5 Gew.-% eines Radikalstarters,
wobei sich die Gewichtsprozente auf die Summe von b₁) bis b₄) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer b₂) ist vorzugsweise mit dem eingesetzten Polyphenylenether verträglich.

Das Molekulargewicht dieser an sich bekannten und im Handel erhältlichen Polymeren liegt im allgemeinen im Bereich von 1 500 bis 2 000 000, vorzugsweise im Bereich von 70 000 bis 1 000 000.

Beispiele für bevorzugte, mit Polyphenylenethern verträgliche vinylaromatische Polymere b₂) sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Geeignete Modifiziermittel b₃) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁- und C₂-C₈-Alkanolen (Monomere b₃₁), die Mono- oder Diamide dieser Säuren wie N-Phenylmaleinimid (Monomere b₃₂), Maleinhydrazid, das Säurechlorid des Trimellithsäureanhydrids, Benzol-1,2-dicarbonsäureanhydrid-4-carbonsäureessigsäureanhydrid, Chlorethanoylsuccinaldehyd, Chlorformylsuccinaldehyd, Zitronensäure und Hydroxysuccinsäure. Als Monomere b₃₃) seien beispielsweise N-Vinylpyrrolidon und (Meth)acryloylcaprolactam genannt.

Als Radikalstarter b₄) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur 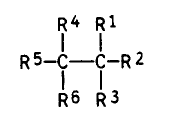
wobei R¹ bis R⁶ Alkylgruppen mit 1 - 8 C-Atomen, Alkoxygruppen mit 1 -8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen darstellen. Die Substituenten R¹ bis R⁶ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2, 2, 3, 3-Tetraphenylbutan.

Bei der Komponente C) der erfindungsgemäßen Formmasse handelt es sich um ein oder mehrere Kern-Schale-Teilchen. Von der Komponente C) werden 2-25, vorzugsweise 3-20 und insbesondere 4-18 Gew.-% angewendet. Die zur Herstellung dieser schlagfest ausgerüsteten Kern-Schale-Teilchen verwendeten Kautschuke müssen elastomere Eigenschaften haben, damit sie eine Verbesserung der Schlagzähigkeit der erfindungsgemäßen Formmasse bewirken. Unter Kautschuken sind demzufolge hochmolekulare Verbindungen zu verstehen, die eine Glastemperatur von weniger als -20°C, vorzugsweise von weniger als -40°C, aufweisen (K.H. Illers, Kolloid-Zeitschrift 176, Seite 110, 1961). Dabei kommen beispielsweise in Frage: Naturkautschuke, Synthesekautschuke wie Polybutadien, Polyisopren und Copolymerisate von Butadien mit Styrol oder Acrylnitril, ferner Elastomere auf Basis von Alkylestern der Acrylsäure, wobei der Alkylrest 1 bis 8 C-Atome aufweisen kann, Copolymerisate von Alkylestern der Acrylsäure mit Butadien, Styrol, Acrylnitril und Vinylethern, Copolymerisate aus Ethylen-Propylen und einem nichtkonjugierten Dien (EPDM-Kautschuke), sowie Ethylen-Vinylacetat-Copolymere und chlorierte Polyethylene.

Die Herstellung der erfindungsgemäß anzuwendenden Komponente C) kann nach bekannten Verfahren in Emulsion, Masse, Lösung und Suspension oder nach kombinierten Verfahren, wie in Masse-Suspension, erfolgen. Solche Verfahren sind beispielsweise in DE-A-24 27 960, 19 11 882, 12 60 135, 12 38 207, 12 47 021 und in der US-PS 3 517 774 beschrieben.

Die Herstellung der erfindungsgemäß einzusetzenden Kern-Schale-Teilchen erfolgt i.a. in zwei Stufen. Hierzu wird zunächst die Pfropfgrundlage c₁) hergestellt. Auf bis zu 37 Gew.-%, vorzugsweise 15-37 Gew.-%, dieser Pfropfgrundlage werden dann mindestens 63 Gew.-%, vorzugsweise 63 bis 85 Gew.-%, bezogen auf C), der die Pfropfhülle bildenden Monomeren c₂) aufgepfropft.
c₁): Zunächst wird in der Grundstufe ein Kautschuklatex auf herkömmliche Weise vorzugsweise in Emulsion hergestellt. Der Grundkautschuk ist durch seine Glasübergangstemperatur definiert, die unterhalb von -20°C vorzugsweise unterhalb von -40°C liegen soll. Als Monomere werden Butadien, oder Gemische aus Butadien und Estern der Acrylsäure verwendet. Da für manche Zwecke Butadien-Acrylnitril-Kautschuke bzw. Terpolymerisate aus Butadien, Acrylsäureestern und Vinylalkylethern Vorteile zeigen, können auch derartige Monomeren-Gemische eingesetzt werden. Im Falle der Herstellung von Kautschuken auf reiner Acrylatbasis werden zusätzlich zu den Acrylmonomeren noch vernetzende Monomere, wie Divinylbenzol, Diallylphthalat, Ethylenglycoldimethacrylat, Triallylcyanurat, Triallylisocyanurat, Butandioldiacrylat, Tricyclodecenylacrylat in dem Fachmann bekannten Mengen mit verwendet. Bevorzugte Acrylate sind Ethyl-, n-Butyl- und 2-Ethylhexylacrylat.
   Die Polymerisation wird üblicherweise bei Temperaturen zwischen 30 und 90°C in Gegenwart von Emulgatoren wie Alkalisalzen von Alkyl- oder Alkylarylsulfonaten, Alkylsulfaten, Fettalkoholsulfonaten oder Fettsäuren mit 10 bis 30 Kohlenstoffatomen durchgeführt. Vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 0,6 bis 2,0 Gew.-%, bezogen auf die Monomeren, verwendet. Es werden die üblichen Puffersalze, wie Natriumbicarbonat und Natriumpyrophosphat, verwendet.
   Ebenso werden die üblichen Initiatoren, wie Persulfate oder organische Peroxide, mit Reduktionsmitteln verwendet, sowie gegebenenfalls Molekulargewichtsregler, wie Mercaptane, Terpene oder dimeres α-Methylstyrol, die am Anfang oder während der Polymerisation zugegeben werden. Das Gewichtsverhältnis Wasser zu Monomere(s) liegt vorzugsweise zwischen 2:1 und 1:1. Die Polymerisation wird so lange fortgesetzt, bis mehr als 90 %, vorzugsweise mehr als 96 %, der Monomeren polymerisiert sind. Dieser Umsatz ist im allgemeinen nach 4 bis 20 Stunden erreicht. Der dabei erhaltene Kautschuklatex hat in der Regel eine Teilchengröße, die unterhalb von 1 µm, vorzugsweise unter 0,65 µm, liegt. Die Teilchengrößenverteilung solcher Kautschuklatices ist verhältnismäßig eng, so daß man von einem nahezu monodispersen System sprechen kann.
   Vor der Pfropfung kann die den Kautschuk enthaltende Dispersion agglomeriert werden. Dies geschieht z.B. durch Zugabe einer Dispersion eines Acrylesterpolymerisates. Vorzugsweise werden Dispersionen von Copolymerisaten von Acrylestern von Alkoholen mit 1 bis 8 Kohlenstoffatomen, vorzugsweise von Alkoholen mit 1 bis 4 Kohlenstoffatomen, besonders bevorzugt von Äthylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Äthylacrylat und 4 % Methacrylamid. Die Agglomerierdispersion kann gegebenenfalls auch mehrere der genannten Acrylesterpolymerisate enthalten.
   Die Konzentration der Acrylesterpolymerisate in der Dispersion soll im allgemeinen zwischen 3 und 40 Gew.-% liegen. Bei der Agglomeration werden üblicherweise 0,2 bis 10, vorzugsweise 1 bis 5 Gew.-% der Agglomerierdispersion, bezogen auf den Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.
   Unter geeigneten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der mittlere Durchmesser der Kautschukteilchen liegt im allgemeinen im Bereich von 0,05 und 1,0 µm, vorzugsweise von 0,1 bis 0,65 µm,.
c₂): Zur Herstellung des Kern-Schale-Teilchens C) werden dann in einem zweiten Schritt in Gegenwart des so erhaltenen Latex-Polymerisates c₁) die Monomeren, die die harte Pfropfhülle c₂) bilden, polymerisiert. Unter einer harten Hülle versteht man im allgemeinen eine Hülle, deren Glasübergangstemperatur (bestimmt durch DSC) über 20, vorzugsweise über 40, insbesondere über 75°C liegt.

Die Monomeren werden vorteilhaft so ausgewählt, daß die entstehenden auf c₁) aufgepfropften Polymeren mit dem PPE verträglich sind. Die Verträglichkeit kann überprüft werden, indem man das oder die Monomeren in Abwesenheit der Pfropfgrundlage c₁) polymerisiert, mit dem PPE mischt und mit den Methoden der Polymerphysik die Verträglichkeit untersucht. Methoden hierzu sind der Monographie von Olabisi, Robeson und Shaw, Polmer Miscibility (Academic Press, New York, 1979) Chapter 3 zu entnehmen. Genannt seien beispielsweise thermoanalytische Methoden (DSC) oder die Bestimmung von Trübungskurven. Durch die Verträglichkeit der harten Hülle c₂) mit dem PPE wird erreicht, daß die Komponente C) in der thermoplastischen Formmasse im PPE lokalisiert ist. Die harte Hülle c₂) wird vorzugsweise aus vinylaromatischen Monomeren gebildet. Hier seien beispielhaft genannt: Styrol, Chlorstyrol, α-Methylstyrol, p-Methylstyrol, p-tert.-Butylstyrol. In Mengen von im allgemeinen weniger als 20, vorzugsweise weniger als 8 und inbesondere weniger als 4 Gew.-%, bezogen auf c₂), können auch Comonomere wie (Meth)acrylnitril, Methacrylsäureester usw. am Aufbau von c₂) beteiligt sein. Die Komponente c₂) enthält vorteilhaft keine nennenswerten Mengen an reaktiven Monomeren (wie z.B. Maleinsäureanhydrid), da diese mit dem Polyamid A) reagieren können und dazu führen, daß C) in A) dispergiert ist. Vorzugsweise wird die harte Hülle c₂) aus Styrol und/oder α-Methylstyrol gebildet.

Es ist vorteilhaft, diese Pfropfmischpolymerisation auf das als Pfropfgrundlage dienende Polymerisat c₁) in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage c₁), wobei, falls notwendig, weiterer Emulgator und Initiator zugegeben werden kann. Das aufzupfropfende Monomeren-Gemisch kann dem Reaktionsgemisch auf einmal, in mehreren Stufen oder vorzugsweise kontinuierlich während der Polymerisation zugegeben werden. Die Pfropfmischpolymerisation wird vorteilhaft so geführt, daß ein Pfropfgrad von 63 bis 85 Gew.-%, vorzugsweise von 65 bis 85 Gew.-%, im Pfropfmischpolymerisat C) resultiert.

Bei der Emulsions-Pfropfmischpolymerisation entstehen im allgemeinen etwa 5 bis 15 Gew.-%, bezogen auf das Pfropfmischpolymerisat C), an freiem, ungepfropftem Polymeren aus den die harte Hülle c₂) bildenden Monomeren.

Die Komponente C) kann auch mehrstufig aus einem Kern und mehreren Schalen aufgebaut sein, wobei vorteilhaft die zuletzt aufgebrachte Hülle mit dem Polyphenylenether verträglich ist.

Der Schlagzähmodifizier C) ist bevorzugt in der Phase der Komponente B) lokalisiert. Bevorzugt ist die Komponente C) in der Formmasse in der Komponente B) dispergiert. Die mittlere Teilchengröße von C) liegt in diesen Fällen im allgemeinen im Bereich von 0,05 bis 0,7 µm, vorzugsweise von 0,25 bis 0,4 µm.

Als Komponente D) werden die üblichen zur Verbesserung der Zähigkeit von Polyamiden oder Polyphenylenethern eingesetzten, schlagzäh modifizierenden Polymeren (auch Schlagzähmodifier, Elastomere oder Kautschuke genannt) verwendet.

Als Kautschuke d₁), die die Zähigkeit von Polyphenylenethern erhöhen, seien z.B. folgende genannt:
Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke` ferner mit Styrol gepfropfte EP- bzw. EPDM-Kautschuke.

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise ein Endblock, aus vinylaromatischen Monomeren wie Styrol, α-Methylstyrol, Vinyltoluol, Vinyl- oder Isopropenylnaphthalin aufgebaut ist. Polystyrol als vinylaromatischer Block ist besonders bevorzugt.

Üblicherweise enthalten diese bevorzugten Blockcopolymere weiterhin einen elastomeren Block, der durch eine Glastemperatur von weniger als 0°C, vorzugsweise von weniger als -30°C charakterisiert ist. Dieser Block leitet sich z.B. von konjugierten Dienen wie Butadien, Isopren, 1,3-Pentadien oder 2,3-Dimethylbutadien ab. Um Produkte mit guter Dauerwärmeformbeständigkeit zu erhalten, hat es sich als besonders geeignet erwiesen, wenn mindestens 50 %, vorzugsweise mindestens 80 % und insbesondere mindestens 90 % der Doppelbindungen hydriert werden.

Die Übergänge zwischen den einzelnen Blöcken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-B, A-B-A' oder A-B-A'-B', wobei A und A' den vinylaromatischen Block, vorzugsweise Polystyrol, darstellen und B und B' den elastomeren Block, der vorzugsweise aus Butadien und/oder Isopren - wobei sowohl Butadien als auch Isopren hydriert sein können - aufgebaut ist.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, USA 3 149 182, US-A 3 231 635 und US-A 3 462 162 verwiesen.

Auch im Handel sind entsprechende Produkte erhältlich, z.B. ein Polyoctenylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Kautschuke d₂), die die Zähigkeit von Polyamiden erhöhen, weisen i.a. zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:
EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren d₃) sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern d₄) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weiteren Bestandteil können die erfindungsgemäßen Formmassen 0 bis 50, vorzugsweise 5 bis 35 und insbesondere 10 bis 30 Gew.-% eines faser- oder teilchenförmigen Füllstoffes (Komponente E) oder deren Mischungen enthalten.

Bevorzugte faserförmige Verstärkungsstoffe (Komponente E) sind Kohlenstoffasern, Kaliumtitanatwhiskers, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Die erfindungsgemäßen Formmassen können weiterhin Flammschutzmittel F) in einer Konzentration von 0 bis 20 Gew.-%, bevorzugt von 1 bis 15 Gew.-% und insbesondere von 3 bis 10 Gew.-%, bezogen auf das Gesamtgewicht der Formmasse, enthalten.

Geeignete Flammschutzmittel sind z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2, 6, 2',6'-Tetrabrombisphenols A, der Tetrabromphthalsäure, des 2,6-Dibromphenols und 2, 4, 6-Tribromphenols und deren Derivate.

Bevorzugtes Flammschutzmittel F) ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a -dodecahydro-1,4:7,10-dimethanodibenzo(a,e)-cyclooctan (Dechlorane®Plus, Occidental Chemical Corp.) und gegebenenfalls einem Synergisten, z.B. Antimontrioxid. Weitere Phosphorverbindungen wie organische Phosphate, Phosphonate, Phosphinate, Phosphinoxide, Phosphine oder Phosphite sind ebenfalls bevorzugt. Als Beispiel sei Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die in der vorliegenden Erfindung verwendet werden können, sind solche der folgenden allgemeinen Formel 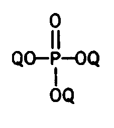
worin Q für gleiche oder verschiedene Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri(nonylphenyl)phosphat, Phenylmethylhydrogenphosphat, Di (dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Die bevorzugte Morphologie der erfindungsgemäßen Formmassen ist charakterisiert durch eine Matrix, die von der Komponente A) gebildet wird und darin dispergierte Teilchen der Komponente B). Der Schlagzähmodifier D) kann sowohl in A) als auch in B), bevorzugt jedoch in B) lokalisiert sein.

Die mittlere Teilchengröße von B) sollte unter 2 µm,, vorzugsweise unter 1 µm liegen.

Entgegen der Lehre der DE 38 34 912 wird die Wärmeformbeständigkeit durch den erhöhten Anteil an Polystyrol in der Pfropfhülle von C) nicht herabgesetzt.

Die erfindungsgemäßen thermoplastischen Formmassen können nach an sich bekannten Verfahren hergestellt werden, indem man die Ausgangskomponenten A), B), C) und gegebenenfalls D), E) und F) in üblichen Mischvorrichtungen wie Schneckenextrudern vorzugsweise Zweischneckenextruder, Brabender-Mühlen oder Banburry-Mühlen mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 240 bis 380°C erforderlich. Die Abmischreihenfolge der Komponenten kann variiert werden, so können zwei oder ggf. drei Komponenten vorgemischt werden, es können aber auch alle Komponenten gemeinsam gemischt werden.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen eignen sich zur Herstellung von Formkörpern mit guter Zähigkeit, Steifigkeit und hoher Wärmeformbeständigkeit. Aufgrund ihrer Eigenschaften eignen sich diese Formkörper besonders zur Herstellung von Karosserieteilen und Funktionsteilen im Motorbereich von Kraftfahrzeugen sowie zur Fertigung von Teilen für den Elektrosektor.

### Beispiele

Es wurden folgende Komponenten eingesetzt:
(A) Polyamid 6,6 (Viskositätszahl nach DIN 53 727 in konzentrierter Ameisensäure: VZ = 134 cm³/g)
(B) Modifizierter Polyphenylenether
   90 Gew.-% Poly(2,6-dimethyl-1,4-phenylen)ether b₁) mit einer Viskositätszahl η_{red} = 0,58 dl/g (1 Gew.-% in CHCl₃, 25°C), 9 Gew.-% Polystyrol b₂) (MFI (200°C/5 kg) = 22 g/10') und 1 Gew.-% Fumarsäure werden in einem Zweischneckenextruder (L/D = 20) bei einer Zylindertemperatur von 280°C in der Schmelze gemischt. Die Schmelze wird im letzten Gehäuseteil des Extruders entgast, in einem Wasserbad abgekühlt und der Strang granuliert.

### Herstellung der Komponenten C)

Herstellung der Komponenten c₁₋₁) (agglomerierter Polybutadien-Kautschuk)

In einem für 10 bar ausgelegten V2A-Stahlkessel mit Blattrührer wurden die folgenden Produkte vorgelegt:
150 Liter Nasser
1,2 kg des Natriumsalzes einer Paraffinsulfonsäure (C₁₂-C₁₈)
0,3 kg Kaliumpersulfat
0,3 kg Natriumbicarbonat
0,15 kg Natriumpyrophosphat
Zur Entfernung des Sauerstoffs wurde der Kessel zweimal mit Stickstoff gespült und die Lösung dann in Stickstoff-Atmosphäre auf 65°C erhitzt. Darauf wurden der Lösung 0,5 kg tert.-Dodecylmercaptan und 16,6 kg Butadien zugeführt. Eine Stunde nach Polymerisationsbeginn wurden weitere 83,3 kg Butadien innerhalb von 5 Stunden zudosiert. 5 Stunden nach Beendigung der Butadien-Zugabe, d.h. nach insgesamt 11 Stunden, wurden nochmals 0,5 kg tert.-Dodecylmercaptan zugegeben. Nach einer Reaktionszeit von insgesamt 19 Stunden wurde der Kessel auf Normaldruck entspannt und es wurde bei eine: Umsatz von 96 % eine Polybutadien-Emulsion mit einem Feststoffgehalt von 39,2 Gew.-%, bezogen auf die Emulsion, erhalten. Der Polybutadien-Latex hatte eine Glastemperatur von ca. -80°C und eine mittlere Teilchengröße von 0,08 µm (d₅₀-Wert der integralen Massenverteilung, bestimmt mittels Ultrazentrifuge).

Die Polybintadiendispersion wurde im Kessel unter vermindertem Druck (200 mbar) bei 65°C während 30 Minuten unter Rühren entgast. Danach wurden bei 65°C 255 kg der Polybutadien-Emulsion mit 74 Litern Wasser verdünnt. Zur Agglomeration des Latex wurden 30 kg einer wäßrigen Dispersion eines Ethylacrylat-Copolymeren zudosiert, das 96 Gew.-% Ethylacrylat und 4 Gew.-% Methacrylamid einpolymerisiert enthielt. Der Feststoffgehalt dieser Dispersion betrug 10 Gew.-%, bezogen auf die Dispersion. Nach der Agglomeration wurde ein Polybutadien-Latex erhalten, in dem etwa 80 % (Zahlenanteil) der Teilchen im nicht agglomerierten Zustand vorlagen.

Die integrale Massenverteilung, die mittels einer Ultrazentrifuge bestimmt wurde, ergab eine breite Verteilung mit folgendem bimodalem Charakter:
d₁₀-Wert: 0,08 µm
d₅₀-Wert: 0,24 µm
d₉₀-Wert: 0,39 µm

### Herstellung der Komponenten c₁₋₂) (Polybutadien-Kautschuk)

Es wurde wie in der oben beschriebenen Weise Butadien polymerisiert, jedoch wurde die Menge des Natriumsalzes der Paraffinsulfonsäure auf 1 kg reduziert und kein Agglomerierschritt angeschlossen.

Der erhaltene Latex hat eine mittlere Teilchengröße (d₅₀-Wert) von 0,1 µm.

### Herstellung der Komponenten c₁₋₃) (feinteiliger Polybutylacrylat-Kautschuk)

16 kg Butylacrylat und 0,4 kg Tricyclodecenylacrylat werden in 150 kg Wasser unter Zusatz von 1 kg des Natriumsalzes einer C₁₂- bis C₁₆-Paraffinsulfonsäure, 0,3 kg Kaliumpersulfat, 0,3 kg Natriumhydrogencarbonat und 0,15 kg Natriumpyrophosphat unter Rühren auf 60°C erwärmt. 10 Minuten nach dem Anspringen der Polymerisationsreaktion wurden innerhalb von 3 Stunden eine Mischung aus 82 kg Butylacrylat und 1,6 kg Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (d₅₀-Wert) wurde zu 76 nm ermittelt.

### Herstellung der Komponenten c₁₋₄) (grobteiliger Polybutylacrylat-Kautschuk)

Zu einer Vorlage aus 2,5 kg des in der Stufe C₁₋₃) dieses Beispiels hergestellten Latex wurden nach Zugabe von 50 kg Wasser und 0,1 kg Kaliumpersulfat im Verlauf von 3 Stunden einerseits eine Mischung aus 49 kg Butylacrylat und 1 kg Tricyclodecenylacrylat und andererseits eine Lösung von 0,5 kg des Natriumsalzes einer C₁₂- bis C₁₈-Paraffinsulfonsäure in 25 kg Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (d₅₀-Wert) wurde zu 288 nm ermittelt. Die Teilchengrößenverteilung war eng (Q = 0,1).

Herstellung der Komponente C) durch Pfropfen der Elastomeren c₁₋₁) bis c₁₋₄).

Die Elastomeren wurden nach folgender Vorschrift mit den in Tab. 1 angegebenen Mengen folgender Monomerer gepfropft.

Die Elastomerdispersionen c₁₋₁) bis c₁₋₄) wurden zunächst mit Wasser verdünnt, so daß nach Abschluß der Pfropfpolymerisation ein Feststoffgehalt von 30 % zu erwarten war.

Die Elastomer-Emulsion wurde auf 70°C aufgeheizt und bei dieser Temperatur mit 0,13 kg Kaliumpersulfat (in Form einer 3-%igen, wäßrigen Lösung), 0,02 kg tert.-Dodecylmercaptan, 11 kg Styrol und gegebenenfalls weiteren Comonomeren versetzt. 12 Minuten nach Beginn der Pfropfreaktion wurde innerhalb von 2 3/4 Stunden die noch fehlende Menge der Monomeren zudosiert. Dabei stellte sich eine Reaktionstemperatur von 75°C ein. Nach Beendigung der Monomerenzugabe wurde die Reaktion noch eine Stunde fortgesetzt. Nach dem Abkühlen der Dispersion auf 30 bis 40°C wurde über ein Sieb abgelassen. Das entstandene Pfropfpolymerisat wurde dann mittels einer Magnesiumsulfat-Lösung bei 95°C gefällt, abgesaugt und getrocknet.

Komponente D) Cariflex TX 1102 ®: Dreiblockkautschuk (S-B-S Styrol-Butadien-Styrol) mit einem Styrolgehalt von 31 Gew.-% und einem Molekulargewicht (M_{w}) von 72.000 bestimmt mittels GPC in THF bei 25°C; Eichung mit Polystyrolstandards (Produkt der Shell AG)

**Tabelle 1**

| Zusammensetzung der Kern-Schale-Teilchen (Zahlenangaben in Gew.-%) Die mit (*) gekennzeichneten Versuche sind Vergleichsbeispiele. | | | | | |
|---|---|---|---|---|---|
| c1 | | | c2 | | |
| Versuch | Elastomer | Styrol | α-Methyl styrol | Methylmethacrylat | Maleinsäureanhydrid |
| C-1* | c₁₋₁ 75 | 25 | -- | -- | -- |
| C-2* | c₁₋₁ 60 | 40 | -- | -- | -- |
| C-3 | c₁₋₁ 35 | 65 | -- | -- | -- |
| C-4 | c₁₋₁ 30 | 70 | -- | -- | -- |
| C-5 | c₁₋₁ 25 | 75 | -- | -- | -- |
| C-6 | c₁₋₁ 30 | -- | 70 | -- | -- |
| C-7 | c₁₋₂ 32 | 68 | -- | --- | -- |
| C-8 | c₁₋₃ 30 | 70 | -- | -- | -- |
| C-9 | c₁₋₄ 32 | 68 | -- | -- | -- |
| C-10* | c₁₋₄ 80 | -- | -- | 19.2 | 0.4 |
| C-11* | c₁₋₄ 80 | -- | -- | 19.6 | -- |
| C-12* | c₁₋₄ 80 | 18.1 | -- | 1.0 | 0.4 |
| C-13* | c₁₋₄ 75 | 24.7 | -- | -- | -- |
| C-10* - C-12*: Die Pfropfhülle enthält noch zusätzlich 0,1 Gew.-% Allylmethacrylat und 0,3 Gew.-% Tris(2-acryloyl-ethyl)isocyanurat; Vergleichsbeispiele gemäß EP 236 593 bzw. EP 234 063 C-13*: Die Pfropfhülle enthält zusätzlich 0,3 Gew.-% Divinylbenzol; Vergleichsbeispiel gemäß US 4 681 915 | | | | | |

### Herstellung der Formmassen:

Die Formmassen der Beispiele und Vergleichsbeispiele wurden bei einer Massetemperatur von 280°C in einem gleichsinnig laufenden, kämmenden Zweiwellenextruder (ZSK 30 der Fa. Werner & Pfleiderer) hergestellt.

Die erhaltenen Granulate wurden getrocknet und durch Spritzguß bei 280°C zu Normprüfkörpern verarbeitet.

Es wurden folgende Prüfungen durchgeführt:

| | |
|---|---|
| Kerbschlagzähigkeit aₖ [kJ/m²] | DIN 53 435 |
| Izod-Kerbschlagzähigkeit [kJ/m²] | ISO 180/4A |
| Reißdehnung εᵣ [N/mm²] | DIN 53 455-3 |
| Zugfestigkeit σₛ [N/mm²] | DIN 53 455-3 |
| E-Modul E_{z} [N/mm²] | DIN 53 457-3 |
| VST/B (Wärmeformbeständigkeit) [°C] | DIN 53 460 |
| Durchstoßarbeit (DSA) [Nm] | DIN 53 443 |

**Tabelle 2**

| Zusammensetzung der Formmassen: 44 Gew.-% A), 44 Gew.-% B, 12 Gew. -% C bzw. D | | | | | | | | |
|---|---|---|---|---|---|---|---|---|
| Beispiel | Komp. C bzw. D | aₖ | Izod | δₛ | εᵣ | E_{z} | DSA | VST/B |
| 1* | C-1* | 4,2 | 4,3 | 70 | 15 | 2530 | 1 | 180 |
| 2* | C-2* | 4,1 | 4,6 | 72 | 14 | 2570 | 3 | 180 |
| 3 | C-3 | 12,9 | 14,4 | 73 | 21 | 2630 | 24 | 180 |
| 4 | C-4 | 14,3 | 17,7 | 72 | 27 | 2600 | 27 | 180 |
| 5 | C-5 | 13,9 | 16,0 | 71 | 24 | 2590 | 25 | 180 |
| 6 | C-6 | 13,7 | 16,4 | 70 | 22 | 2610 | 28 | 182 |
| 7 | C-7 | 15,1 | 20,1 | 74 | 25 | 2600 | 30 | 180 |
| 8 | C-8 | 12,5 | 15,8 | 70 | 24 | 2600 | 24 | 180 |
| 9 | C-9 | 12,8 | 14,7 | 72 | 21 | 2650 | 21 | 183 |
| 10* | C-10* | 14,6 | 17,2 | 45 | 34 | 2130 | 21 | 172 |
| 11* | C-11* | 4,5 | 6,1 | 47 | 12 | 2150 | 4 | 172 |
| 12* | C-12* | 13,1 | 15,0 | 45 | 31 | 2140 | 24 | 172 |
| 13* | C-13* | 8,3 | 12,0 | 70 | 18 | 2590 | 4 | 180 |
| 14* | D | 20,0 | 24,0 | 57 | 38 | 2120 | 42 | 176 |

## Patentansprüche

1. Thermoplastische Formmasse, enthaltend als wesentliche Komponenten
a) 20 bis 73 Gew.-% mindestens eines thermoplastischen Polyamids,
b) 25 bis 65 Gew.-% mindestens eines Polyphenylenethers b₁), der bis zu 50 Gew.-%, bezogen auf die Komponente B) durch ein vinylaromatisches Polymeres b₂) ersetzt werden kann,
C) 2 bis 25 Gew.-% eines schlagzähmodifizierenden Kern-Schale-Teilchens, das aus einem vernetzten elastomeren Kern c₁), der eine Glasübergangstemperatur von unter -20°C aufweist und einer Hülle c₂) mit einer Glasübergangstemperatur von über 20°C, die größtenteils auf Basis von vinylaromatischen Monomeren aufgebaut ist, besteht, die mindestens 63 Gew.-% von c) ausmacht,
D) 0 bis 15 Gew.-% eines von C) verschiedenen schlagzähmodifizierenden Polymeren,
E) 0 - 15 Gew.-% eines von C) verschiedenen schlagzähmodifizierenden Polymeren,
E) 0 bis 50 Gew.-% faser- oder teilchenförmigen Füllstoffen oder deren Mischungen
F) 0 bis 20 Gew.-% eines Flammschutzmittels.

2. Thermoplastische Formmassen nach Anspruch 1 enthaltend
35 bis 60 Gew.-% A),
37 bis 60 Gew.-% B),
3 bis 20 Gew.-% C),
0 bis 15 Gew.-% D),
0 bis 35 Gew.-% E),
0 bis 10 Gew.-% F).

3. Thermoplastische Formmassen nach den Ansprüchen 1 oder 2, dadurch gekennzeichnet, daß der Kern c₁) der Komponente C) größtenteils auf Basis von Butadien aufgebaut ist.

4. Thermoplastische Formmassen nach Anspruch 1, dadurch gekennzeichnet, daß der Kern c₁) der Komponente C) größtenteils auf Basis eines Acrylats aufgebaut ist.

5. Thermoplastische Formmassen nach den Ansprüchen 1 bis 4, dadurch gekennzeichnet, daß die Komponente C) in der Formmasse in der Komponente B) dispergiert ist.

6. Verwendung der thermoplastischen Formmassen gemaß den Ansprüchen 1 bis 5 zur Herstellung von Formkörpern.

7. Formkörper, erhältlich aus den thermoplastischen Formmassen gemäß den Ansprüchen 1 bis 5.

## Claims

1. A thermoplastic molding material containing as essential components
A) from 20 to 73% by weight of at least one thermoplastic polyamide,
B) from 25 to 65% by weight of at least one polyphenylene ether b₁), of which up to 50% by weight, based on component B), may be replaced by an aromatic vinyl polymer b₂),
C) from 2 to 25% by weight of an impact modifying core-shell particle comprising a crosslinked elastomeric core c₁) which has a glass transition temperature of below -20°C and a sheath c₂) which has a glass transition temperature of above 20°C and is largely based on aromatic vinyl monomers which account for at least 63% by weight of C),
D) from 0 to 15% by weight of an impact modifying polymer other than C),
E) from 0 to 50% by weight of a fibrous or particulate filler or of a mixture of a fibrous with a particulate filler, and
F) from 0 to 20% by weight of a flame retardant.

2. A thermoplastic molding material as claimed in claim 1, comprising
from 35 to 60% by weight of A),
from 37 to 60% by weight of B),
from 3 to 20% by weight of C),
from 0 to 15% by weight of D),
from 0 to 35% by weight of E),
from 0 to 10% by weight of F).

3. A thermoplastic molding material as claimed in claim 1 or 2, wherein the core c₁) of component C) is largely based on butadiene.

4. A thermoplastic molding material as claimed in claim 1, wherein the core c₁) of component C) is largely based on an acrylate.

5. A thermoplastic molding material as claimed in claim 1 or 2 or 3 or 4, wherein component C) has been dispersed within the molding material in component B).

6. The use of a thermoplastic molding material as claimed in claim 1 or 2 or 3 or 4 or 5 for producing shaped articles.

7. A shaped article obtainable from a thermoplastic molding material as claimed in claim 1 or 2 or 3 or 4 or 5.

## Revendications

1. Masse à mouler thermoplastique contenant, en tant que composants essentiels,
A) 20 à 73% en poids d'au moins un polyamide thermoplastique,
B) 25 à 65% en poids d'au moins un poly(oxyphénylène) b₁), qui peut être remplacé, pour 50% en poids au maximum par rapport au composant B), par un polymère vinylaromatique b₂),
C) 2 à 25% en poids de particules à noyau et à coque modifiant la résilience, se composant d'un noyau élastomère réticulé c₁) qui présente une température de transition vitreuse inférieure à -20°C, et d'une enveloppe c₂) ayant une température de transition vitreuse superieure à 20°C, formee en majeure partie à base de monomères vinylaromatiques et constituant au moins 63% en poids de C),
D) 0 à 15% en poids d'un polymère modifiant la résilience, différent de C),
E) 0 à 15% en poids de charges fibreuses ou particulaires ou de mélanges de celles-ci,
F) 0 à 20% en poids d'un agent recardant les flammes.

2. Masses à mouler thermoplastiques selon la revendication 1, contenant
35 à 60% en poids de A),
37 à 60% en poids de B),
3 à 20% en poids de C),
0 à 15% en poids de D),
0 à 35% en poids de E),
0 à 10% en poids de F).

3. Masses à mouler thermoplastiques selon la revendication 1 ou 2, caractérisées en ce que le noyau c₁) du composant C) est formé en majeure partie à base de butadiène.

4. Masses à mouler thermoplastiques selon la revendication 1, caractérisées en ce que le noyau c₁) du composant C) est formé en majeure partie à base d'un acrylate.

5. Masses à mouler thermoplastiques selon l'une quelconque des revendications 1 à 4, caractérisées en ce que le composant C) est dispersé dans le composant B) dans la masse à mouler.

6. Utilisation des masses à mouler thermoplastiques selon l'une quelconque des revendications 1 à 5 pour la fabrication de corps moulés.

7. Corps moulés, obtenus à partir des masses à mouler thermoplastiques selon l'une quelconque des revendications 1 à 5.
